Europäisches Patentamt

European Patent Office

Office européen des brevets

(11) Veröffentlichungsnummer: **0 296 486 B1**

## EUROPÄISCHE PATENTSCHRIFT

(45) Veröffentlichungstag der Patentschrift: **16.02.94**

(51) Int. Cl.5: **C08F 299/08**, C09D 183/00

(21) Anmeldenummer: **88109611.9**

(22) Anmeldetag: **16.06.88**

(54) **Strahlenhärtbares Mittel zur Kratzfestbeschichtung von organischen Gläsern und Verfahren zu dessen Herstellung.**

(30) Priorität: **23.06.87 DE 3720671**

(43) Veröffentlichungstag der Anmeldung:
**28.12.88 Patentblatt 88/52**

(45) Bekanntmachung des Hinweises auf die
Patenterteilung:
**16.02.94 Patentblatt 94/07**

(84) Benannte Vertragsstaaten:
**AT BE CH DE ES FR GB IT LI NL SE**

(56) Entgegenhaltungen:
**EP-A- 0 062 899
EP-A- 0 074 010
DE-A- 2 522 241**

(73) Patentinhaber: **Degussa Aktiengesellschaft
Weissfrauenstrasse 9
D-60311 Frankturt(DE)**

(72) Erfinder: **Morlock, Gerhard, Dr.
Wildaustrasse 3
D-6450 Hanau 9(DE)**
Erfinder: **Weigelt, F. Werner, Dr.
Ernst Ludwig Strasse 49
D-6840 Lampertheim(DE)**

EP 0 296 486 B1

**Beschreibung**

Gegenstand der Erfindung ist ein strahlenhärtbares Mittel zur Kratzfestbeschichtung von organischen Gläsern, bestehend aus

A) 82 bis 64 Gewichtsprozent eines Cokondensates, das seinerseits hergestellt wurde durch Cokondensation von

$A_1$) 90 bis 65 Gewichtsprozent Vinyltrimethoxy- oder -triethoxysilan oder einem Gemisch dieser beiden Silane und

$A_2$) 10 bis 35 Gewichtsprozent Tetramethoxy- oder Tetraethoxysilan oder einem Gemisch dieser beiden Silane,

B) 9 bis 27 Gewichtsprozent mindestens eines Reaktivverdünners, der pro Molekül mindestens 2 Vinyl-, Acryl- oder Methacrylgruppen aufweist und

C) 0 bis 9 Gewichtsprozent mindestens eines an sich bekannten Photoinitiators,

wobei sich die Komponenten A), B) und C) zu 100 Gewichtsprozent addieren.

Ein weiterer Gegenstand der Erfindung sind Verfahren zur Herstellung dieses Mittels.

Das erfindungsgemäße Mittel ist insbesondere geeignet zur Oberflächenvergütung von organischen Gläsern auf der Grundlage von Polymethylmethacrylat, Polycarbonat und Poly-(diethylenglykol-bis-allylcarbonat) (CR 39). Es kann durch Elektronenstrahlen gehärtet werden und erfordert dann den Zusatz der Komponente C) nicht. Soll die Härtung durch UV-Strahlung erfolgen, ist jedoch der Zusatz der Komponente C) erforderlich.

Aus der EP 0 062 899 A1 ist ein strahlenhärtbarer Überzug bekannt, der neben diversen Silanen auch einen vinylischen Vernetzer enthalten kann. Die Silane enthalten immer Alkylgruppen. Der vinylische Vernetzer wird, bezogen auf die Gewichtsmenge des Silan-Polykondensationsproduktes im Überschuß eingesetzt, nur diese Produkte mit dem hohen Vernetzeranteil erreichen gute Ergebnisse hinsichtlich der Kratztestigkeit der Beschichtung.

Aus der EP 0 074 010 A2 sind verschiedene Siloxan-Verbindungen bekannt, die zu einer Beschichtung für Thermoplaste polykondensiert werden können. Die Härtung erfolgt durch Verdampfen von Lösungsmittel und durch Kondensation der Organosiloxane, wobei die Anwesenheit von linearen Molekülketten aus Alkoxysilanen notwendig ist. Weitere Vernetzer kommen nicht zum Einsatz.

Die Komponente A) ist ein Cokondensat, das hergestellt wird durch Cokondensation von 90 bis 65 Gewichtsprozent Vinyl-trimethoxy oder -triethoxysilan oder einem Gemisch dieser beiden Silane und 10 bis 35 Gewichtsprozent Tetramethoxy- oder Tetraethoxysilan oder einem Gemisch dieser beiden Silane. Besonders vorteilhaft ist es, wenn in der Komponente A) das Verhältnis von Vinylgruppen zu Siliziumatomen zwischen 0,5 : 1 und 0,92 : 1, vorzugsweise zwischen 0,75 : 1 und 0,85 : 1, liegt.

Die Komponente B) ist ein sogenannter Reaktivverdünner, der pro Molekül mindestens 2 Vinyl-, Acryl- oder Methacrylgruppen aufweist und dazu befähigt ist, mit den Vinylgruppen der Komponente A) ein vernetztes Copolymerisat zu bilden. Für die Komponente B) geeignete Reaktivverdünner sind beispielsweise Pentaerythrittriacrylat, Pentaerythrittetraacrylat, Butandiol-1,4-diacrylat, Hexandiol-1,6-diacrylat, Ethylenglykoldiacrylat, Diethylenglykoldiacrylat, Triethylenglykoldiacrylat, Tripropylenglykoldiacrylat, Trimethylolpropantriacrylat und die entsprechenden Methacrylate; Divinylverbindungen, wie Divinylbenzol, und Trivinylverbindungen.

In vielen Fällen ist es zweckmäßig, wenn als Komponente B) ein Gemisch aus mehreren derartigen Reaktivverdünnern eingesetzt wird. Besonders vorteilhaft ist es, wenn 1 bis 10 Gewichtsprozent der Komponente B) pro Molekül mindestens eine freie Hydroxylgruppe aufweisen. Besonders bevorzugte Gemische von Reaktivverdünnern sind solche aus Pentaerythrittriacrylat und Hexandiol-1,6-diacrylat, insbesondere dann, wenn das Gewichtsverhältnis etwa 2 : 1 beträgt.

In durch UV-Strahlung härtbaren erfindungsgemäßen Mitteln muß auf jeden Fall auch die Komponente C) enthalten sein, vorzugsweise in einer Menge von 7 bis 9 Gewichtsprozent des gesamten Mittels. Geeignete an sich bekannte Photoinitiatoren sind beispielsweise Benzoinether, wie Methylbenzoinether, Ethylbenzoinether, Isopropylbenzoinether oder n-Butylbenzoinether; 2,2-Dialkoxyacetophenone und 2,2-Dialkoxy-2-phenylacetophenone; 2-Hydroxy-2,2-substituierte Acetophenone, wie 2-Hydroxy-2-phenylpropiophenon, 2-Hydroxy-2,2-dimethylacetophenon oder 1-Benzoyl-cyclohexan1-ol; Benzophenone, wie 4-Chlorbenzophenon, 4-Phenylbenzophenon, 4,4-Bis-(diethylamino)-benzophenon oder 4-p-Tolylthiobenzophenon; ringförmige Benzophenonderivate, wie Fluorenon, 2-Methylanthrochinon, Dibenzosuberon, 2-Chlorthioxanthon, 2-Methylthioxanthon, 2-Isopropylthioxanthon oder 2,4-Diethylthioxanthon; Benzil und 3-Ketosubstituierte Cumarine. Als Photoinhitiator wird in den Reaktivverdünner(gemischen) bevorzugt 2-Hydroxy-2,2-dimethylacetophenon eingesetzt.

2

Die erfindungsgemäßen Mittel können so hergestellt werden, daß man die Cokondensation der Komponenten $A_1$) und $A_2$) durch Zusatz von 1 bis 1,3 Mol Wasser pro Mol vorhandener Methoxy- und Ethoxygruppen auslöst und durch Erhitzen des Reaktionsgemisches unter Rückfluß vervollständigt, daß man dann die flüchtigen Anteile des Reaktionsgemisches unter vermindertem Druck vollständig entfernt, und daß man das als Rückstand hinterbleibende ölige Polysiloxan mit der Komponente B) und gegebenenfalls der Komponente C) homogen vermischt.

Alternativ dazu können die erfindungsgemäßen Mittel auch so hergestellt werden, daß man die Cokondensation der Komponenten $A_1$) und $A_2$) durch Zusatz von 0,5 bis 0,8 Gewichtsprozent, bezogen auf das Gesamtgewicht der Komponenten $A_1$) und $A_2$), einer Carbonsäure mit 2 bis 8 Kohlenstoffatomen, vorzugsweise Essigsäure, auslöst und durch Erhitzen des Reaktionsgemisches unter Rückfluß vervollständigt, daß man wiederum dann die flüchtigen Anteile des Reaktionsgemisches unter vermindertem Druck vollständig entfernt, und daß man das als Rückstand hinterbleibende ölige Polysiloxan mit der Komponente B) und gegebenenfalls der Komponente C) homogen vermischt.

Unabhängig davon, ob die Cokondensation der Komponenten $A_1$) und $A_2$) in Gegenwart von Wasser oder in Gegenwart einer Carbonsäure vorgenommen wird, erfordert eine vollständige Cokondensation maximal ein vierstündiges Erhitzen unter Rückfluß. Im allgemeinen ist jedoch ein ein- bis zweistündiges Erhitzen völlig ausreichend.

Die erfindungsgemäßen Mittel können unverdünnt für die Beschichtung von organischen Gläsern eingesetzt werden. Wenn eine niedrigere Viskosität erwünscht ist, können sie aber auch mit etwa 5 bis 25 Gewichtsprozent eines geeigneten Lösungsmittels, beispielsweise Isobutanol, verdünnt werden. Sie werden nach bekannten Verfahren, wie Fluten, Tauchen oder Spritzen auf das zu beschichtende organische Glas aufgetragen und dann mittels Elektronenstrahlen oder durch UV-Strahlung ausgehärtet. Die Naßschichtdicke bewegt sich im allgemeinen zwischen 0,5 und 20 $\mu$m. Die endgültige Härte ist normalerweise nach spätestens 24 Stunden Lagerung erreicht.

Die Erfindung wird durch die nachfolgenden Beispiele näher erläutert. Teile und Prozentangaben bedeuten, wenn nicht anders angegeben, Gewichtsteile und Gewichtsprozente.

Die in den Beispielen aufgetragenen und ausgehärteten Beschichtungen wurden mit einem Gitterschnittprüfgerät der Firma Erichsen nach DIN 53 151 auf Haftfestigkeit und mit einem Gardener Hazemeter, Typ XL 211, nach 100 Zyklen Abrieb mit dem Taber Abraser bei 1 kg Auflage auf dem Reibrad CS-10F nach ASTM D 1044 auf Kratzfestigkeit geprüft. Die Gitterschnittkennwerte und die Werte für $\Delta$ % Haze sind in der Tabelle 3 zusammengestellt.

Beispiel 1:

Eine Mischung aus 80 Teilen Vinyltrimethoxysilan, 20 Teilen Tetraethoxysilan und 54 Teilen Wasser wurde 2 Stunden am Rückfluß gekocht. Nach Abkühlen des Reaktionsgemisches wurde unter Wasserstrahlvakuum das entstandene Gemisch aus Wasser, Methanol und Ethanol vollständig entfernt. Der ölige Rückstand wurde mit einem Gemisch aus 13,3 Teilen Pentaerythrittriacrylat und 6,6 Teilen Hexandiol-1,6-diacrylat homogen vermischt.

In 92 Teile dieser Mischung wurden 8 Teile 2-Hydroxy-2,2-dimethylacetophenon (Merck AG, Darmstadt) gleichmäßig eingemischt. Der fertige Lack wurde mittels Rakel in einer Schichtdicke von 10 $\mu$m auf Polycarbonatplatten (9 cm x 9 cm) appliziert und unter einer UV-Lampe (IST-Anlage) mit einer Geschwindigkeit von 2m/Minute ausgehärtet.

Beispiel 2:

Eine Mischung aus 100 Teilen Vinyltrimethoxysilan, 25 Teilen Tetraethoxysilan und 1 Teil Eisessig (98 %ig) wurde 2 Stunden am Rückfluß gekocht. Nach Abkühlen des Reaktionsgemisches wurden unter Wasserstrahlvakuum alle flüchtigen Anteile vollständig entfernt. Der ölige Rückstand wurde mit einem Gemisch aus 25 Teilen Pentaerythrittriacrylat und 12,5 Teilen Hexandiol-1,6-diacrylat homogen vermischt. In 115 Teile dieser Mischung wurden 10 Teile 2-Hydroxy-2,2-dimethylacetophenon gleichmäßig eingemischt. Der fertige Lack wurde mittels Rakel in einer Schichtdicke von 10 $\mu$m auf Polymethylmethacrylatplatten (9 cm X 9 cm) appliziert und wie im Beispiel 1 ausgehärtet.

Beispiele 3 bis 6:

Verschiedene Mischungen aus Vinyltrimethoxysilan (VTMO) bzw. Vinyltriethoxysilan (VTEO) und Tetramethoxysilan (TMO) bzw. Tetraethoxysilan (TEO) wurden analog zu Beispiel 1 cokondensiert und wie in Beispiel 1 zu einem fertigen Lack weiterverarbeitet, der mittels Rakel in einer Schichtdicke von 10 μm auf Polymethylmethacrylatplatten (9 cm x 9 cm) appliziert und wie im Beispiel 1 ausgehärtet wurde.

Tabelle 1 (Angaben in Gewichtsteilen):

| Beispiel | VTMO | VTEO | TMO | TEO |
|----------|------|------|-----|-----|
| 3 | 80 | - | - | 10 |
| 4 | 80 | - | 10 | - |
| 5 | - | 80 | 40 | - |
| 6 | - | 80 | - | 40 |

Beispiele 7 bis 10:

Das Cokondensat des Beispiels 1 wurde mit verschieden zusammengesetzten Mischungen aus Pentaerythrittriacrylat (PETA) und Hexandiol-1,6-diacrylat (HDDA) vermischt und wie in Beispiel 1 zu einem fertigen Lack weiterverarbeitet, der mittels Rakel in einer Schichtdicke von 10 μm auf Polycarbonatplatten und teilweise auch auf Polymethylmethacrylatplatten (jeweils 9 cm x 9 cm) appliziert und wie im Beispiel 1 ausgehärtet wurde.

Tabelle 2 (Angaben in Gewichtsteilen)

| Beispiel | PETA | HDDA |
|----------|------|------|
| 7 | 10 | 10 |
| 8 | 20 | 10 |
| 9 | 20 | 3 |
| 10 | 20 | 15 |

Beispiel 11:

Das Cokondensat des Beispiels 2 wurde mit einem Gemisch aus 20 Teilen Pentaerythrittriacrylat und 10 Teilen Tripropylenglykoldiacrylat homogen vermischt. In 115 Teile dieser Mischung wurden 10 Teile 2-Hydroxy-2,2-dimethylacetophenon gleichmäßig eingemischt. Der fertige Lack wurde mittels Rakel in einer Schichtdicke von 10 μm auf Polycarbonatplatten und Polymethylmethacrylatplatten (jeweils 9 cm x 9 cm) appliziert und wie im Beispiel 1 ausgehärtet.

Tabelle 3 (Abrieb ( Δ % Haze) und Gitterschnittkennwerte (GT) der Beschichtungen auf Polycarbonat (PC) und Polymethyl- methacrylat (PMMA)):

| Beispiel | auf PC | | auf PMMA | |
|---|---|---|---|---|
| | Δ % Haze | GT | Δ % Haze | GT |
| 1 | 2,1 | - | - | - |
| 2 | - | - | 2,0 | - |
| 3 | - | - | 2,9 | 0 |
| 4 | - | - | 3,5 | - |
| 5 | - | - | 3,4 | 0 |
| 6 | - | - | 3,8 | 0 |
| 7 | 5,4 | 0 | 3,0 | 0 |
| 8 | 2,1 | 0 | 1,7 | 0 |
| 9 | 2,6 | 2 | - | - |
| 10 | 2,8 | 0 | - | - |
| 11 | 1,5 | 1-2 | 2,7 | 0 |

**Patentansprüche**

1. Strahlenhärtbares Mittel zur Kratzfestbeschichtung von organischen Gläsern, bestehend aus
   A) 82 bis 64 Gewichtsprozent eines Cokondensates, das seinerseits hergestellt wurde durch Cokondensation von
   $A_1$) 90 bis 65 Gewichtsprozent Vinyltrimethoxy- oder -triethoxysilan oder einem Gemisch dieser beiden Silane und
   $A_2$) 10 bis 35 Gewichtsprozent Tetramethoxy- oder Tetraethoxysilan oder einem Gemisch dieser beiden Silane,
   B) 9 bis 27 Gewichtsprozent mindestens eines Reaktivverdünners, der pro Molekül mindestens 2 Vinyl-, Acryl- oder Methacrylgruppen aufweist und
   C) 0 bis 9 Gewichtsprozent mindestens eines an sich bekannten Photoinitiators,
   wobei sich die Komponenten A), B), und C) zu 100 Gewichtsprozent addieren.

2. Mittel nach Anspruch 1, dadurch gekennzeichnet, daß in der Komponente A) das Verhältnis von Vinylgruppen zu Siliziumatomen zwischen 0,5 : 1 und 0,92 : 1 liegt.

3. Mittel nach Anspruch 2, dadurch gekennzeichnet, daß in der Komponente A) das Verhältnis von Vinylgruppen zu Siliziumatomen zwischen 0,75 : 1 und 0,85 : 1 liegt.

4. Mittel nach einem der Ansprüche 1 bis 3, dadurch gekennzeichnet, daß 1 bis 10 Gewichtsprozent der Komponente B) pro Molekül mindestens eine freie Hydroxylgruppe aufweisen.

5. Mittel nach einem der Ansprüche 1 bis 4, dadurch gekennzeichnet, daß als Komponente B) ein Gemisch aus Pentaerythrittriacrylat und Hexandiol-1,6-diacrylat dient.

6. Durch UV-Strahlung härtbares Mittel nach einem der Ansprüche 1 bis 5, dadurch gekennzeichnet, daß es die Komponente C) in einer Menge von 7 bis 9 Gewichtsprozent enthält.

7. Verfahren zur Herstellung eines Mittels nach einem der Ansprüche 1 bis 6, dadurch gekennzeichnet, daß die Cokondensation der Komponenten $A_1$) und $A_2$) durch Zusatz von 1 bis 1,3 Mol Wasser pro Mol vorhandener Methoxy- und Ethoxygruppen ausgelöst und durch Erhitzen des Reaktionsgemisches unter Rückfluß vervollständigt wird, daß dann die flüchtigen Anteile des Reaktionsgemisches unter vermindertem Druck vollständig entfernt werden,und daß das als Rückstand hinterbleibende ölige Siloxan mit der Komponente B) und gegebenenfalls der Komponente C) homogen vermischt wird.

8. Verfahren zur Herstellung eines Mittels nach einem der Ansprüche 1 bis 6, dadurch gekennzeichnet, daß die Cokondensation der Komponenten $A_1$) und $A_2$) durch Zusatz von 0,5 bis 0,8 Gewichtsprozent, bezogen auf das Gesamtgewicht der Komponenten $A_1$) und $A_2$),einer Carbonsäure mit 2 bis 8 Kohlenstoffatomen ausgelöst und durch Erhitzen des Reaktionsgemisches unter Rückfluß vervollständigt wird, daß dann die flüchtigen Anteile des Reaktionsgemisches unter vermindertem Druck vollständig entfernt werden, und daß das als Rückstand hinterbleibende ölige Siloxan mit der Komponente B) und gegebenenfalls der Komponente C) homogen vermischt wird.

9. Verfahren nach Anspruch 8, dadurch gekennzeichnet, daß als Carbonsäure Essigsäure eingesetzt wird.

## Claims

1. Radiation-curable abrasion-resistant coating composition for organic glasses, comprising
   A) from 82 to 64 wt-% of a cocondensate itself prepared by cocondensation of
      $A_1$) from 90 to 65 wt-% of vinyltrimethoxysilane or vinyltriethoxysilane or a mixture of the latter two silanes and
      $A_2$) from 10 to 35 wt-% of tetramethoxysilane or tetraethoxysilane or a mixture of the latter two silanes,
   B) from 9 to 27 wt-% of at least one reactive thinner which exhibits per molecule at least 2 vinyl, acrylic or methacrylic groups and
   C) from 0 to 9 wt-% of at least one photoinitiator which is known per se,
   wherein components A), B) and C) total 100 wt-%.

2. Composition according to Claim 1, characterised in that in component A) the ratio of vinyl groups to silicon atoms is between 0.5 : 1 and 0.92 : 1.

3. Composition according to Claim 2, characterised in that in component A) the ratio of vinyl groups to silicon atoms is between 0.75 : 1 and 0.85 : 1.

4. Composition according to one of Claims 1 to 3, characterised in that from 1 to 10 wt-% of component B) exhibit at least one free hydroxyl group per molecule.

5. Composition according to one of Claims 1 to 4, characterised in that a mixture of pentaerythritol triacrylate and 1,6-hexanediol diacrylate serves as component B).

6. UV radiation-curable composition according to one of Claims 1 to 5, characterised in that it contains component C) in a quantity of from 7 to 9 wt-%.

7. Process for the preparation of a composition according to one of Claims 1 to 6, characterised in that cocondensation of components $A_1$) and $A_2$) is started by the addition of from 1 to 1.3 mole water per mole available methoxy and ethoxy groups and is completed by heating the reaction mixture under reflux, in that the volatile constituents of the reaction mixture are then removed in their entirety under reduced pressure, and in that the oily siloxane which is left as a residue is mixed homogeneously with component B) and optionally component C).

8. Process for the preparation of a composition according to one of Claims 1 to 6, characterised in that cocondensation of components $A_1$) and $A_2$) is started by the addition of from 0.5 to 0.8 wt-%, calculated on the total weight of components $A_1$) and $A_2$), of a carboxylic acid having from 2 to 8 carbon atoms and is completed by heating the reaction mixture under reflux, in that the volatile constituents of the reaction mixture are then removed in their entirety under reduced pressure, and in that the oily siloxane which is left as a residue is mixed homogeneously with component B) and optionally component C).

9. Process according to Claim 8, characterised in that acetic acid is utilised as carboxylic acid.

**Revendications**

1. Agent durcissable par radiation pour le revêtement résistant à l'abrasion de verres organiques, se composant de :
   A) 82 à 64 pour cent en poids d'un co-condensé, qui, de son côté est préparé par co-condensation de :
      A1) 90 à 65 pour cent en poids d'un vinyl-triméthoxysilane ou d'un vinyl-triéthoxysilane ou d'un mélange de ces deux silanes et
      A2) 10 à 35 pour cent en poids de tétraméthoxysilane ou de tétraéthoxysilane ou d'un mélange de ces deux silanes,
   B) 9 à 27 pour cent en poids d'au moins un diluant réactif, qui comprend par molécule, au moins 2 groupes vinyle, acryle ou méthacryle et
   C) 0 à 9 pour cent au moins d'un photo initiateur connu en soi, dans lequel les composants A), B) et C) s'ajoutent pour donner 100 pour cent en poids.

2. Agent selon la revendication 1, caractérisé en ce que dans le composant A), le rapport des groupes de vinyle aux atomes de silicium se situe entre 0,5 : 1 et 0,92 : 1.

3. Agent selon la revendication 2, caractérisé en ce que dans le composant A) le rapport des groupes de vinyle aux atomes de silicium se situe entre 0,75 : 1 et 0,85 : 1.

4. Agent selon une des revendications 1 à 3, caractérisé en ce que 1 à 10 pour cent en poids du composant B) comportent par molécule au moins un hydroxyle libre.

5. Agent selon une des revendications 1 à 4, caractérisé en ce que comme composant B), on utilise un mélange d'acrylate de pentaérythritol et d'hexanediol - 1,6 - diacrylate.

6. Agent durcissable par radiation UV selon une des revendications 1 à 5, caractérisé en ce qu'il contient le composant C) en une quantité de 7 à 9 pour cent en poids.

7. Procédé de préparation d'un agent selon une des revendications 1 à 6, caractérisé
   - en ce que la co-condensation des composants A1) et A2) est déclenchée par l'addition de 1 à 1,3 mole d'eau par mole de groupes méthoxy ou de groupes éthoxy et est complétée par réchauffage du mélange réactionnel sous reflux.
   - en ce qu'ensuite les parties volatiles du mélange réactionnel sont complètement éliminées sous pression réduite, et
   - en ce que le siloxane huileux restant comme résidu est mélangé de manière homogène avec le composant B) et, éventuellement le composant C).

8. Procédé de préparation d'un agent selon une des revendications 1 à 7, caractérisé
   - en ce que la co-condensation des composants A1) et A2) est déclenchée par addition de 0,5 à 0,8 pour cent en poids, rapporté au poids total des composants A1) et A2), d'un acide carboxylique ayant de 2 à 8 atomes de carbone et elle est complétée par réchauffage du mélange réactionnel sous reflux,
   - en ce qu'ensuite les parties volatiles du mélange réactionnel sont éliminées complètement sous pression réduite, et
   - en ce que le siloxane huileux restant comme résidu est mélangé de manière homogène avec le composant B) et, éventuellement, le composant C).

9. Procédé selon la revendication 8, caractérisé en ce que comme acide carboxylique on utilise de l'acide acétique.